# EUROPÄISCHE PATENTANMELDUNG

(11) **EP 1 082 993 A2**
(43) Veröffentlichungstag der Anmeldung: **14.03.2001**
(21) Anmeldenummer: 00119603.9
(22) Anmeldetag: 07.09.2000
(51) Int. Cl.: B01D 69/12, C23C 4/06

(54) **Verbund aus einer Kompositmembran**

(30) Priorität: 10.09.1999 DE 19943409
(71) Anmelder: Linde Gas Aktiengesellschaft, 82049 Höllriegelskreuth (DE)
(72) Erfinder: Heinrich, Peter, Dipl.-Ing. (FH), 82110 Germering (DE); Krömmer, Werner, 84034 Landshut (DE)
(74) Vertreter: Imhof, Dietmar

(57) **Zusammenfassung**

Die Erfindung betrifft einen Verbund aus einer Kompositmembran in Form einer Beschichtung auf einem sintermetallischen Trägerkörper. Erfindungsgemäß ist die zumindest auf einer metallischen Basis aufgebaute Beschichtung mittels eines thermischen Spritzverfahrens hergestellt. Dabei eignen sich insbesondere die Verfahren des Hochgeschwindigkeits-Flammspritzens, Kaltgasspritzens oder Plasmaspritzens.

## Beschreibung

Die Erfindung betrifft einen Verbund aus einer Kompositmembran in Form einer Beschichtung auf einem sintermetallischen Trägerkörper.

In der Industrie gewinnen Verbunde aus einer Kompositmembran in Form einer Beschichtung auf einem sintermetallischen Trägerkörper zunehmend an Bedeutung. Verbunde aus einer Kompositmembran in Form einer Beschichtung auf einem sintermetallischen Trägerkörper sind im Rahmen der vorliegenden Erfindung so zu verstehen, daß der Verbund zumindest eine Beschichtung auf einem sintermetallischen Trägerkörper als Membrangrundkörper umfaßt.

Angestrebt werden Verbunde mit optimierten und insbesondere an die Einsatzbedingungen angepaßten Eigenschaften. Danaben spielt auch eine kostengünstige Erzeugung der Beschichtung eine Rolle.

Der Erfindung liegt die Aufgabe zugrunde, einen Verbund der eingangs genannten Art aufzuzeigen, der eine im wesentlichen fehlstellenfreie Beschichtung auf den sintermetallischen Träger als Membrangrundkörper aufweist, wobei der Verbund stark wechselnden Temperaturbelastungen und hohen Ansprüchen an die Festigkeit beim Einsatz der Membran gewachsen sein soll.

Diese Aufgabe wird erfindungsgemäß durch die Herstellung der zumindest auf einer metallischen Basis aufgebauten Beschichtung mittels eines thermischen Spritzverfahrens gelöst.

Mit Hilfe von thermischen Spritzverfahren gelingt es, Beschichtungen auf den feinporösen Oberflächen des sintermetallischen Trägerkörpers mit der notwendigen Haftung zu erzeugen, wobei die so erzeugte Beschichtung aus dichten, sehr homogenen und ebenen Schichten besteht.

Die erfindungsgemäße Herstellung der zumindest auf einer metallischen Basis aufgebauten Beschichtung mittels eines thermischen Spritzverfahrens ermöglicht eine kostengünstige Erzeugung der Beschichtung auf dem sintermetallischen Trägerkörper. Im Gegensatz zu möglichen Alternativverfahren für das Aufbringen der Beschichtung ermöglicht die Herstellung mittels thermischen Spritzens Schichten aus Materialien aus unterschiedlichsten Elementen herzustellen. Die Beschichtung kann dabei in großen Variationsbreiten an gewünschte und auch an spezifische Anforderungen angepaßt werden.

Es hat sich gezeigt, daß Beschichtungen mit den erwähnten und erwünschten Eigenschaften insbesondere durch den Einsatz von hochenergetischen Spritzverfahren erzeugt werden können. In Ausgestaltung der Erfindung wird die Beschichtung daher mittels Plasmaspritzens oder bevorzugt mittels Hochgeschwindigkeits-Flammspritzens oder Kaltgasspritzens hergestellt.

Beim thermischen Spritzen als Beschichtungsverfahren sind als Verfahrensvarianten das autogene Flammspritzen oder das Hochgeschwindigkeits-Flammspritzen, das Lichtbogenspritzen, das Plasmaspritzen, das Detonationsspritzen und das Laserspritzen bekannt.

Thermische Spritzverfahren zeichnen sich im wesentlichen dadurch aus, daß sie gleichmäßig aufgetragene Beschichtungen ermöglichen. Durch thermische Spritzverfahren aufgetragene Beschichtungen können durch Variation der Spritzmaterialien an unterschiedliche Anforderungen angepaßt werden. Die Spritzmaterialien können dabei in Form von Drähten, Stäben oder als Pulver verarbeitet werden. Beim thermischen Spritzen kann zusätzlich eine thermische Nachbehandlung vorgesehen sein.

In jüngerer Zeit wurde darüber hinaus ein weiteres thermisches Spritzverfahren entwickelt, welches auch als Kaltgasspritzen bezeichnet wird. Es handelt sich dabei um eine Art Weiterentwicklung des Hochgeschwindigkeits-Flammspritzens mit Pulver. Dieses Verfahren ist beispielsweise in der europäischen Patentschrift EP 0 484 533 B1 beschrieben. Beim Kaltgasspritzen kommt ein Zusatzwerkstoff in Pulverform zum Einsatz. Die Pulverpartikel werden beim Kaltgasspritzen jedoch nicht im Gasstrahl geschmolzen. Vielmehr liegt die Temperatur des Gasstrahles unterhalb des Schmelzpunktes der Pulverpartikel des Zusatzwerkstoffes (EP 0 484 533 B1) oder aber nur in geringem Maße oberhalb der Schmelztemperatur des Pulvers. Im Kaltgasspritzverfahren wird also ein im Vergleich zu den herkömmlichen Spritzverfahren "kaltes" bzw. ein vergleichsweise kälteres Gas verwendet. Gleichwohl wird das Gas aber ebenso wie in den herkömmlichen Verfahren erwärmt, aber lediglich auf Temperaturen unterhalb des Schmelzpunktes der Pulverpartikel des Zusatzwerkstoffes.

Als Hochgeschwindigkeits-Flammspritzverfahren können dabei das Hochgeschwindigkeits-Flammspritzen der ersten und der zweiten Generation mit mittleren Spritzpartikelgeschwindigkeiten von 400 bis 500 m/s (gemessen mit einem Spritzpulver WC-Co mit einer Körnung ― 45µm + 10 µm, d.h. einer Verteilung bezüglich der Körnerdurchmesser von 10 bis 45 µm) und bevorzugt das Hochgeschwindigkeits-Flammspritzen der dritten Generation mit Spritzpartikelgeschwindigkeiten von 500 bis 700 m/s (gemessen mit einem Spritzpulver WC-Co mit einer Körnung ― 45 µm + 10 µm) zum Einsatz kommen. Beim Kaltgasspritzen können die Pulverpartikel auf eine Geschwindigkeit von 300 bis 1600 m/s beschleunigt werden. Es eignen sich dabei insbesondere Geschwindigkeiten der Pulverpartikel zwischen 500 und 1200 m/s.

Das für das thermische Spritzen benötigte Gas kann Stickstoff, Helium, Argon, Neon, Krypton, Xenon, ein Wasserstoff enthaltendes Gas, ein kohlenstoffhaltiges Gas, insbesondere Kohlendioxid, Sauerstoff, ein Sauerstoff enthaltendes Gas, Luft, Wasserdampf oder Mischungen der vorgenannten Gase enthalten. Neben den aus der EP 0 484 533 B1 bekannten Gasen Luft und/oder Helium eignen sich auch für das den pulverförmigen Zusatzwerkstoff tragende Gas ein Stickstoff, Argon, Neon, Krypton, Xenon, Sauerstoff, ein Wasserstoff enthaltendes Gas, ein kohlenstoffhaltiges Gas, insbesondere Kohlendioxid, Wasserdampf oder Mischungen der vorgenannten Gase und Mischungen dieser Gase mit Helium. Der Anteil des Helium am Gesamtgas kann bis zu 90 Vol.-% betragen. Bevorzugt wird ein Heliumanteil von 10 bis 50 Vol.-% im Gasgemisch eingehalten.

In Ausgestaltung der Erfindung ist der mittlere Porendurchmesser D₅₀ der thermisch gespritzten Beschichtung kleiner als 1 µm, bevorzugt kleiner als 0,8 µm, besonders bevorzugt kleiner als 0,6 µm.

Vorteilhafterweise wird eine thermisch gespritzte Beschichtung mit einer engen Porenradienverteilung bzw. engen Porendurchmesserverteilung erzeugt, wobei der Porendurchmesser D₁₆ und/oder der Porendurchmesser D₈₄ nicht mehr als 15%, vorzugsweise nicht mehr als 10%, besonders bevorzugt nicht mehr als 5%, vom mittleren Porendurchmesser D₅₀ der thermisch gespritzten Beschichtung abweichen. Mit der Bezeichnung Porendurchmesser D₁₆ bzw. D₈₄ sind die Werte der Porendurchmesserverteilung bei 16% bzw. 84% bezeichnet.

Mit der Erfindung sind besondere Vorteile im Zusammenhang mit den Membraneigenschaften verbunden, wenn die gespritzte dichte Beschichtung dünn auf dem Trägerkörper aufgetragen ist. Vorteilhafterweise beträgt die Schichtdicke der thermisch gespritzten Beschichtung weniger als 10 µm, bevorzugt weniger als 7,5 µm, besonders bevorzugt weniger als 5 µm.

Die thermisch gespritzte Beschichtung kann alle für den Einsatz im Zusammenhang mit Membranen geeigneten Materialien enthalten. Die thermisch gespritzte Beschichtung kann insbesondere Palladium (Pd) oder bevorzugt eine Palladiumlegierung enthalten. Bei der letztgenannten Möglichkeit kann die Beschichtung insbesondere eine Palladiumlegierung mit mindestens einem Metall aus der Gruppe Silber (Ag), Kupfer (Cu), Titan (Ti), Zirkon (Zr), Vanadium (V), Nickel (Ni) enthalten. Bevorzugt umfaßt die thermisch gespritzte Beschichtung eine Palladiumlegierung mit einem Palladiumanteil von 50 bis 90 Gew.-%. Derartige Palladiumlegierungen können beispielsweise einen Anteil von 10 bis 50 Gew.-% Ag oder 10 bis 50 Gew.-% Cu enthalten.

In Weiterbildung der Erfindung ist der sintermetallische Trägerkörper hohl, insbesondere rohrförmig ausgebildet. Dies ermöglicht, daß beispielsweise Katalysatormaterial im Trägerkörper aufgenommen werden kann.

Die Kompositmembran kann für verschiedenartige Stoffe durchlässig sein. Die Kompositmembran kann erfindungsgemäß insbesondere für Wasserstoff (H₂) durchlässig sein.

Besondere Vorteile ergeben sich bei der Erfindung im Zusammenhang mit der Verwendung des Verbunds aus einer Kompositmembran in Form einer Beschichtung auf einem sintermetallischen Trägerkörper in einem Festbett-Membranreaktor.

## Patentansprüche

1. Verbund aus einer Kompositmembran in Form einer Beschichtung auf einem sintermetallischen Trägerkörper, **gekennzeichnet durch** die Herstellung der zumindest auf einer metallischen Basis aufgebauten Beschichtung mittels eines thermischen Spritzverfahrens.

2. Verbund nach Anspruch 1, dadurch gekennzeichnet, daß die Beschichtung mittels Hochgeschwindigkeits-Flammspritzens oder mittels Kaltgasspritzens oder mittels Plasmaspritzens hergestellt wird.

3. Verbund nach Anspruch 1 oder 2, dadurch gekennzeichnet, daß der mittlere Porendurchmesser D₅₀ der thermisch gespritzten Beschichtung kleiner als 1 µm, bevorzugt kleiner als 0,8 µm, besonders bevorzugt kleiner als 0,6 µm ist.

4. Verbund nach einem der Ansprüche 1 bis 3, dadurch gekennzeichnet, daß eine enge Porenradienverteilung in der thermisch gespritzten Beschichtung vorliegt, wobei der Porendurchmesser D₁₆ und/oder der Porendurchmesser D₈₄ nicht mehr als 15 %, vorzugsweise nicht mehr als 10 %, besonders bevorzugt nicht mehr als 5 %, vom mittleren Porendurchmesser D₅₀ der thermisch gespritzten Beschichtung abweichen.

5. Verbund nach einem der Ansprüche 1 bis 4, dadurch gekennzeichnet, daß die Schichtdicke der thermisch gespritzten Beschichtung weniger als 10 µm, bevorzugt weniger als 7,5 µm, besonders bevorzugt weniger als 5,0 µm beträgt.

6. Verbund nach einem der Ansprüche 1 bis 5, dadurch gekennzeichnet, daß die thermisch gespritzten Beschichtung Palladium oder bevorzugt eine Palladium-Legierung enthält.

7. Verbund nach Anspruch 6, dadurch gekennzeichnet, daß die thermisch gespritzten Beschichtung eine Palladiumlegierung mit mindestens einem Metall aus der Gruppe Ag, Cu, Ti, Zr, V, Nb, Ni enthält.

8. Verbund nach Anspruch 6 oder 7, dadurch gekennzeichnet, daß die thermisch gespritzten Beschichtung eine Palladiumlegierung mit einem Palladiumanteil von 50 bis 90 Gew.-% umfaßt.

9. Verbund nach einem der Ansprüche 1 bis 8, dadurch gekennzeichnet, daß der sintermetallische Trägerkörper hohl, insbesondere rohrförmig, ausgebildet ist.

10. Verbund nach einem der Ansprüche 1 bis 9, dadurch gekennzeichnet, daß die Kompositmebran für Wasserstoff durchlässig ist.

11. Verwendung des Verbunds aus einer Kompositmembran in Form einer Beschichtung auf einem sintermetallischen Trägerkörper in einem Festbett-Membranreaktor.
